(19) **Europäisches Patentamt**
**European Patent Office**
**Office européen des brevets**

(11) **EP 1 856 587 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(21) Anmeldenummer: **06707358.5**

(22) Anmeldetag: **02.03.2006**

(51) Int Cl.:
**F16H 61/02** *(2006.01)* **F16K 31/06** *(2006.01)*
**G05D 16/20** *(2006.01)*

(86) Internationale Anmeldenummer:
**PCT/EP2006/001881**

(87) Internationale Veröffentlichungsnummer:
**WO 2006/094693 (14.09.2006 Gazette 2006/37)**

(54) **PROPORTIONAL-DRUCKREGELVENTIL MIT DRUCKSPRUNG IN SEINER P/L-KENNLINIE**

PROPORTIONAL PRESSURE CONTROL VALVE COMPRISING A PRESSURE JUMP IN THE CHARACTERISTIC P/I CURVE THEREOF

SOUPAPE DE REGULATION DE PRESSION PROPORTIONNELLE PRESENTANT UNE BRUSQUE VARIATION DE PRESSION DANS SA COURBE CARACTERISTIQUE P/L

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.03.2005 DE 102005010693**

(43) Veröffentlichungstag der Anmeldung:
**21.11.2007 Patentblatt 2007/47**

(73) Patentinhaber: **ZF Friedrichshafen AG**
**88038 Friedrichshafen (DE)**

(72) Erfinder:
• **MAYR, Karlheinz**
**A-6900 Bregenz (AT)**
• **SCHMIDT, Thilo**
**88074 Meckenbeuren (DE)**
• **MOOSMANN, Markus**
**88214 Ravensburg (DE)**

(56) Entgegenhaltungen:
**DE-A1- 10 248 181      DE-A1- 10 308 143**
**US-A1- 2003 037 825    US-A1- 2004 130 421**
**US-B1- 6 328 065**

**Beschreibung**

Die vorliegende Erfindung betrifft ein Proportional-Druckregelventil gemäß dem Oberbegriff des Patentanspruchs 1.

Üblicher Weise wird in einem Getriebe, insbesondere in einem Automatgetriebe für ein Kraftfahrzeug, der Druck im Hydraulikkreis bedarfsorientiert geregelt. Dabei kann das Druckniveau für die Schmierölversorgung der Getriebebauteile gering gehalten werden. Bestimmte Verbraucher benötigen allerdings zeitweise einen Druck, der über einem bestimmten Schwellwert liegt. Beispielsweise muß während der Schaltvorgänge der Druck im Hydraulikkreis angehoben werden, um die Schaltelemente schnell mit Druckmittel befüllen zu können.

Für die Regelung des Drucks in Hydraulikkreisen von Kraftfahrzeugen werden üblicherweise Druckregelventile eingesetzt, welche Steuerelemente zur Kupplungsbetätigung ansteuern. Die Steuerung der Steuerelemente erfolgt innerhalb des Druckregelventils mittels eines Proportional-Magneten, welcher unter anderem aus einem Magnetkern, einer Magnetspule und einem Magnetanker besteht. Hierbei wird über den Proportional-Magneten der Spulenstrom proportional zu der Ausgangsgröße Kraft gesteuert; der Magnetanker und damit das Steuerelement zur Kupplungssteuerung werden entsprechend dem Spulenstrom gesteuert. Aus den daraus resultierenden charakteristischen Magnetkraft-Strom-Kennlinien des Druckregelventils werden in einer elektrohydraulischen Steuerung von Automatgetrieben die zur Kupplungsanpassung gewünschten Druck-Strom-Kennlinien p/I-Kennlinien erzeugt.

In der US 2003/0037825 A1 ist ein Proportional-Druckregelventil für ein Fahrzeuggetriebe angegeben, welches ein Magnetteil mit einem Magnetkern, einer Spule und einem Magnetanker, sowie ein Hydraulikteil mit mindestens einem ersten und einem zweiten Schließelement umfasst. Zum Öffnen und/oder Schließen der Schließelemente ist dabei eine zwischen Ankerstange Und erstem Schließelement angeordnete Stößelstange vorgesehen ist, welche mit dem ersten Schließelement fest verbunden ist. Zur Dämpfung eines möglicherweise auftretenden Öffnungskraftstoßes seitens des zweiten Schließelements ist eine Druckfeder zwischen dem Magnetkern und dem Magnetanker angeordnet.

Aus der Patentanmeldung DE 102 55 414 A1 ist dabei ein Proportional-Druckregelventil bekannt, welches aus einem Magnetteil und einem Hydraulikteil besteht. Der Magnetteil besteht unter anderem aus einer Magnetspule, einem Magnetanker und einem Magnetkern. Der Magnetanker weist dabei zwei Magnetankerteile auf, wobei ein erster Teil fest mit einer Ankerstange verbunden ist und ein zweiter Teil auf der Ankerstange axial verschiebbar angeordnet ist. Beide Teile des Ankers sind über eine Feder miteinander verbunden. Durch diese Ausführung wird ein progressiver Verlauf der p/I-Kennlinie ermöglicht. Der Verlauf der p/I-Kenntinie ist hier bei niedrigen Stromwerten sehr flach, die Auflösung der Kennlinie ist also hoch. Dadurch kann der auszugebende Druck des Proportional-Druckregelventils sehr genau eingestellt werden. Einige Verbraucher, wie z. B. Schaltkupplungen bei Kraftfahrzeugen, benötigen zur Regelung die Beaufschlagung mit einem Druck, welcher immer über einem ersten Schwellwert liegt. Erst bei Anliegen eines Druckes, der höher ist als dieser Schwellwert, kann eine Regelung des Verbrauchers durchgeführt werden. Dieser Schwellwert wird Fülldruck genannt.

Aufgabe der Erfindung ist es, ein alternatives Proportional-Druckregelventil zu ermöglichen, welches eine progressive p/I-Kennlinie bietet, und ein entsprechendes Verfahren zum Regeln eines Verbrauchers mittels des Proportional-Druckregelventils anzugeben.

Diese Aufgabe wird durch ein Proportional-Druckregelventil mit den Merkmalen des Patentanspruchs 1, sowie durch ein Verfahren mit den Merkmalen des Patentanspruchs 6 gelöst. Weitere Ausgestaltungen und Vorteile des Proportional-Druckregelventils gehen aus den von Anspruch 1 abhängigen Ansprüchen hervor. Ebenso gehen weitere vorteilhafte Ausführungen des Verfahrens aus den von Anspruch 6 abhängigen Ansprüchen hervor.

Demnach wird ein Proportional-Druckregelventil vorgeschlagen, welches aus einem Magnetteil und einem Hydraulikteil besteht. Der Magnetteil besteht zumindest aus einer Magnetspule, einem Magnetanker und einem Magnetkern, wobei der Magnetanker fest mit einer Ankerstange verbunden ist. Der Hydraulikteil ist wiederum über eine Stößelstange mit der Ankerstange verbunden, wobei die Ankerstange über ein elastisches Element mit der Stößelstange verbunden ist. Mit der Stößelstange fest verbunden ist ein erstes Schließelement. Dieses erste Schließelement besitzt eine Sitzfläche, welche mit einer ersten Schließfläche einen Flachsitz bildet. Der Abstand von der Schließfläche im stromlosen Zustand von der Sitzfläche wird Überdeckung genannt. Außerdem wird durch die Stößelstange ein zweites Schließelement betätigt. Dieses zweite Schließelement besitzt vorteilhafter Weise die Form einer Kugel und bildet mit einer zweiten Schließfläche einen Kugelsitz. Der Kugelsitz schließt eine Blende, welche vom Druckmittel mit der Durchströmrichtung in Richtung zum Magnetteil hin durchströmt wird. Wird das Proportional-Druckregelventil mit Strom beaufschlagt, so öffnet die Stößelstange den Kugelsitz. Die zweite Schließfläche, die durch die Kugel verschlossen werden kann, entspricht also einer Kreisfläche mit dem Durchmesser der Blende. In Durchströmrichtung vor dem Flachsitz erstreckt sich ein zylinderförmiger Raum, der auch vom Druckmittel durchströmt wird. Der Durchmesser dieses Raumes wird Nennweite des Ventils genannt.

Durch die Anordnung des elastischen Elements werden einerseits Schwingungen im Ventil gedämpft und andererseits eine flache Steigung der p/I-Kennlinie im Bereich geringer Stromstärke ermöglicht. Durch die Federkopplung zwischen Ankerstange und Stößelstange wird die Betätigungskraft aus dem Magnetteil untersetzt an das auf der Stößelstange angebrachte erste Schließelement übertragen. Dabei verringert sich der Abstand zwischen der Anker- und der Stößelstange. Durch die Federanordnung wird auch die Gefahr des Sitzprellens am Flachsitz, was durch axiale Schwingungen in der Stößelstange auftritt, erheblich verringert.

Muss nun ein Verbraucher mit einem Fülldruck beaufschlagt werden, bevor er geregelt werden kann, so würde bei einer Kennlinie nach dem Stand der Technik gerade der sehr flache Bereich der p/I-Kennlinie benötigt um den Fülldruck zu erreichen. Auf den flachen Verlauf der p/I-Kennlinie schließt sich dann ein steilerer Verlauf der Kennlinie an. Wenn nun mit dieser Kennlinie zuerst der Fülldruck am Schaltelement eingestellt wird, und dann die Regelung erst beginnen kann, ist der Bereich mit höher Auflösung, in der der Druck sehr genau geregelt werden kann, sehr viel kleiner. Das Schaltelement kann also mit solch einer Kennlinie nicht mehr so genau geregelt werden.

Eine weitere Ausgestaltung des erfindungsgemäßen Proportional-Druckregelventils ermöglicht es, den auszugebenden Druck schnell auf einen ersten Schwellwert zu regeln. Hierbei muss die Geometrie des Hydraulikteils besonders ausgelegt werden. Dies wird vorteilhafterweise dadurch erreicht, dass in stromlosem Zustand, in dem der Kugelsitz geschlossen ist, die Überdeckung des Flachsitzes größer ist als der siebte Teil der Nennweite. Weiterhin muss die zweite Schließfläche größer sein als eine Kreisfläche mit der doppelten Überdeckung als Durchmesser. Zudem muss der Durchmesser des Teils der Stößelstange, der beim Öffnen des Kugelsitzes in die Blende hineinragt kleiner sein, als das 0,7-fache des Blendendurchmessers.

Durch die vorteilhafte Ausgestaltung wird ein Proportional-Druckregelventil geschaffen, welches eine p/I-Kennlinie mit einem Drucksprung besitzt. Dieser Drucksprung erfolgt bei einem bestimmten Stromwert, wobei der Druck von Null auf einen Schwellwert, welcher vorteilhafter Weise dem Fülldruck des Verbrauchers entspricht, ansteigt. Nach diesem Drucksprung weist die p/I-Kennlinie einen progressiven Verlauf auf. Das bedeutet, das die p/I-Kennlinie nach dem Drucksprung, im Bereich niedriger Stromstärke einen flachen und im Bereich hoher Stromstärke einen steilen Verlauf besitzt. Mit einem derartigen Proportional-Druckregelventil kann also ein Verbraucher geregelt werden, der erst bei Überschreiten eines bestimmten Schwellwerts anspricht, wobei am Verbraucher nach Erreichen des Schwellwerts eine feine Einstellung des Drucks ermöglicht wird.

Die Erfindung wird im Folgenden anhand der beigefügten Figuren beispielhaft erläutert.
Es stellen dar:

Fig. 1     einen Teilschnitt durch ein erfindungsgemäßes Ventils;

Fig. 2     einen Teilschnitt durch den Magnetteil eines erfindungsgemäßen Ventils;

Fig. 3     einen Teilschnitt durch den Hydraulikteil eines erfindungsgemäßen Ventils und

Fig. 4     eine p/I-Kennlinie eines erfindungsgemäßen Ventils.

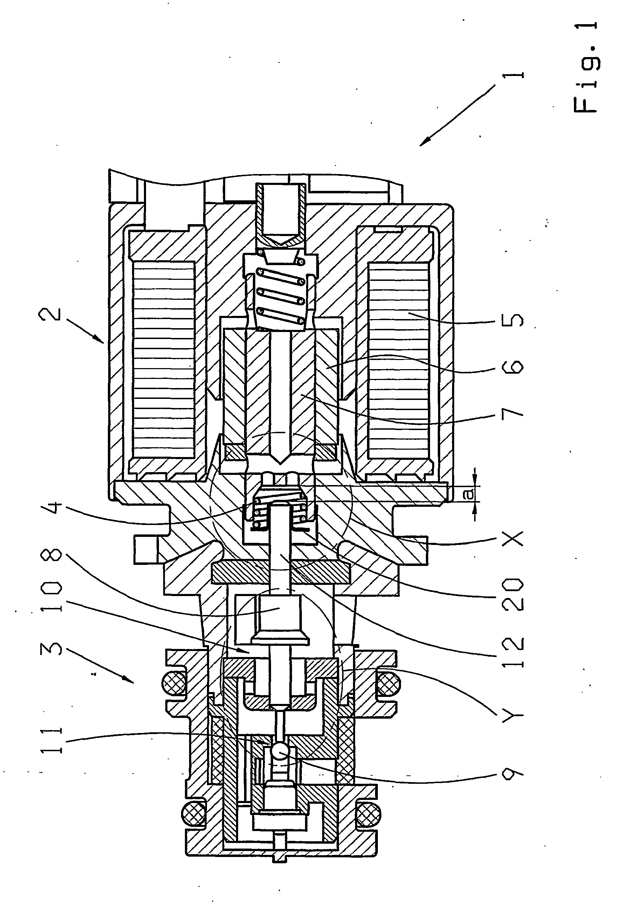

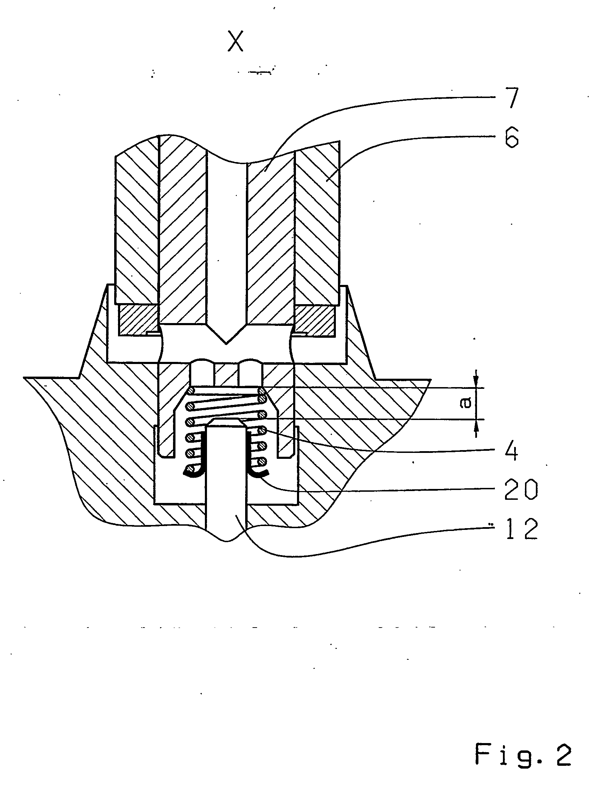

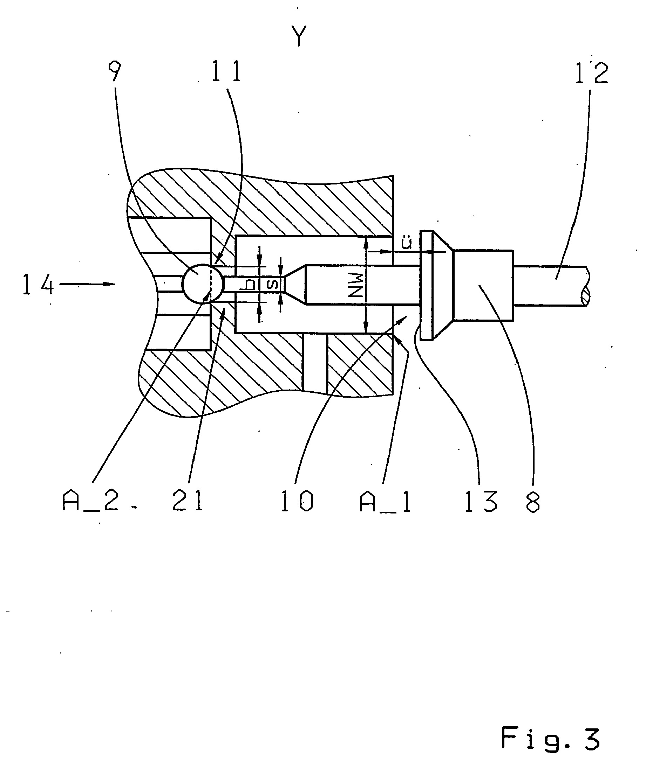

Gemäß Fig.1 umfasst ein erfindungsgemäßes Proportional-Druckregelventil 1 zur Regelung des Druckniveaus ein Magnetteil 2 und ein Hydraulikteil 3. Der Magnetteil besitzt zumindest eine Magnetspule 5 und einen Magnetanker 6, welcher mit einer Ankerstange 7 fest verbunden ist. Die Ankerstange 7 ist über ein elastisches Element 4 mit einer Stößelstange 12 verbunden. Mit der Stößelstange 12 fest verbunden ist ein erstes Schließelement 8. Dieses erste Schließelement 8 bildet mit einer ersten Schließfläche einen Flachsitz 10. Durch die Stößelstange 12 wird weiterhin ein zweites Schließelement 9 betätigt. Dieses zweite Schließelement 9 besitzt die Form einer Kugel und bildet mit einer zweiten Schließfläche einen Kugelsitz 11. Der Kugelsitz 11 schließt eine Blende 21, welche vom Druckmittel axial in Richtung zum Magnetteil hin durchströmt wird. Wird das Proportional-Druckregelventil 1 mit Strom beaufschlagt, so öffnet die Stößelstange 12 den Kugelsitz 11. Detaillierte Darstellungen der beiden Ausschnitte X und Y werden in Fig. 2 und 3 gezeigt.

Fig. 2 stellt einen detaillierten Teilschnitt X des Magnetteils 1 dar. Zu erkennen ist der Anker 6, der mit der Ankerstange 7 fest verbunden ist. Zudem ist mit der Stößelstange 12 ein Mitnahmeelement 20 fest verbunden. Zwischen diesem Mitnahmeelement 20 und der Ankerstange 7 ist ein elastisches Element 4, vorzugsweise eine Feder, angebracht. Das Mitnahmeelement 20 kann natürlich auch eine andere Form, z.B. eine rein radiale Ausdehnung besitzen. Zudem besteht zwischen der Stößelstange 12 und der Ankerstange 7 ein variabler Abstand a. Durch die Federanordnung werden einerseits Schwingungen im Ventil 1 gedämpft und andererseits eine flache Steigung der p/I-Kennlinie im Bereich geringer Stromstärke ermöglicht. Durch diese Federkopplung zwischen den beiden Bauteilen wird die Betätigungskraft aus dem Magnetteil 2 nämlich untersetzt an das auf der Stößelstange 12 angebrachte erste Schließelement 8 übertragen. Dabei verringert sich der Abstand a zwischen der Anker- und der Stößelstange 7, 12. Durch die Federanordnung wird auch die Gefahr des Sitzprellens am Flachsitz 10, was durch axiale Schwingungen in der Stößelstange 12 auftritt, erheblich verringert.

Fig. 3 zeigt einen detaillierten Teilschnitt Y des Hydraulikteils 2 des Ventils 1 in stromlosem Zustand. Zu erkennen ist das zweite kugelförmige Schließelement 9, welches die zweite Schließfläche A_2 verschließt und einen Durchmesser hat. Die zweite Schließfläche A_2 bildet die Stirnseite der Blende 21 mit ihrem Durchmesser b. Weiterhin zeigt Fig. 3 die Stößelstange 12, mit der das erste Schließelement 8 fest verbunden ist. Die Stößelstange 12 hat an ihrem dem zweiten Schließelemente 9 zugewandten Ende einen verringerten Durchmesser s, welcher in die die Blende 21 ragt. Wird das Ventil 1 mit Strom beaufschlagt, wird die das Ende der Stößelstange mit dem Durchmesser s weiter in die Blende 21 geschoben und verschiebt das zweite Schließelement 9 entgegen der Fließrichtung 14 des Druckmittels. Weiterhin hat das erste Schließelement 8 an seiner entgegen der Fließrichtung 14 ausgerichteten Seite eine Sitzfläche 13. Die Sitzfläche 13 bildet mit der ihr gegenüberliegenden ersten Schließfläche A_1 einen Flachsitz 10. Der Abstand von der Sitzfläche 13 zur ersten Schließfläche A_1 entspricht dem Flachsitz-Abstand ü. Der Durchmesser des zylinderförmigen Raums, der sich an den Flachsitz 10 anschließt und in Richtung zum zweiten Schließelemente 9 hin ausdehnt, wird Nennweite NW genannt.

Der Hydraulikteil 2 des erfindungsgemäßen Proportional-Druckregelventils 1 ist geometrisch so ausgelegt, dass sich in der p/I-Kennlinie 16 bei einer bestimmten Stromstärke ein Drucksprung 17 ergibt. Um dies zu erreichen müssen folgende Verhältnisse eingehalten werden:

Die Überdeckung ü muss erfindungsgemäß größer sein als der siebte Teil der Nennweite NW des Ventils:

$$\ddot{u} > \frac{(NW)}{7}.$$

Weiterhin muss die zweite Schließfläche A_2 größer sein als eine Kreisfläche mit einem Durchmesser, der der doppelten Überdeckung ü entspricht:

$$A\_2 > \frac{(2\ddot{u})^2 \pi}{4},$$

sowie der verringerte Durchmesser s der Stößelstange 12 kleiner sein muss als das 0,7-flache des Durchmessers b der Blende 21:

$$s < 0,7 \times b.$$

Durch diese geometrische Auslegung wird erreicht, dass bei einer bestimmten Stromstärke I_1 der ausgegebene Druck p des Ventils 1 sprunghaft von dem Wert null auf einen ersten Druckwert p_1, welcher vorteilhafter Weise dem Fülldruck des Verbrauchers entspricht.

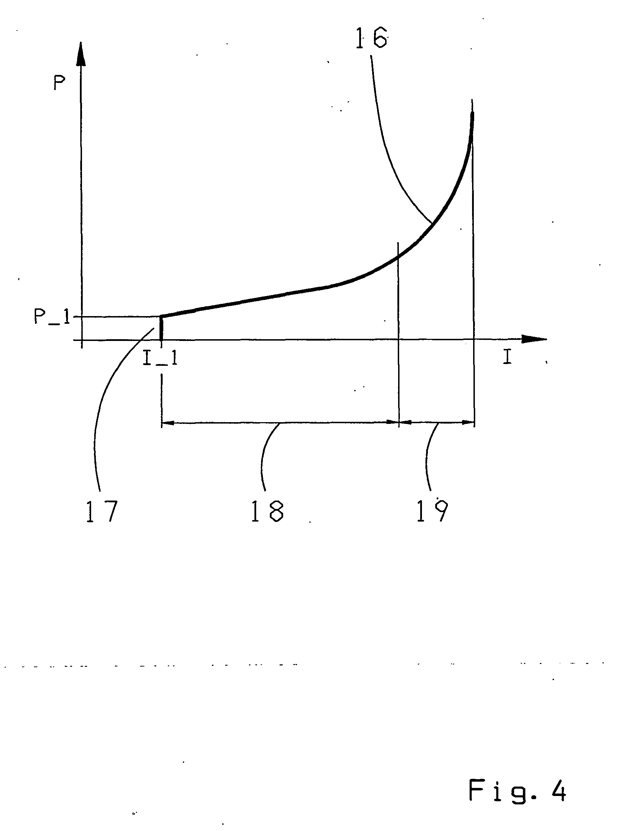

In Fig. 4 ist eine erfindungsgemäße p/I-Kinnlinie dargestellt. Dort ist der Druck p, welcher von dem Proportional-Druckregelventil 1 an einen Verbraucher ausgegeben wird, über der Stromstärke I, die an das Ventil 1 angelegt wird, eingetragen. Der Strom I steigt zuerst an bis zu einer bestimmten ersten Stromstärke I_1, ohne, dass sich der Druck p ändert. Sobald die erste Stromstärke I_1 erreicht ist, springt der Druck p auf einen ersten Druckwert p_1, welcher dem Fülldruck entspricht. Dieser Sprung wird Drucksprung 17 bezeichnet, welcher einem Stromwert von 150 bis 200 mA, besonders vorteilhafter Weise bei 170mA auftritt. Der Druck steigt dabei auf 0,2 bis 0,7bar, vorteilhafter Weise auf 0,3bar an. Nach dem Drucksprung 17 steigt die p/I-Kennlinie progressiv an. Das heißt, dass die p/I-Kennlinie im Bereich geringer Stromstärke 18 eine geringe und im Bereich höhere Stromstärke 19 eine größere Steigung besitzt. Vorzugsweise beträgt die Steigung der p/I-Kennlinie im Bereich geringer Stromstärke 18 um 0 bis 4,0 bar/A, im Bereich höherer Stromstärke 19 mit bis zu 16 bar/A.

Der Drucksprung 17 ist z. B. vorteilhaft um einen Kupplung schnell zu befüllen. Bei einer p/I-Kennlinie ohne Drucksprung 17 würde dafür ein Großteil des flachen Kennlinienbereichs durchlaufen werden, bis der Kupplungsfülldruck p_1 erreicht würde. Gerade der flache Bereich der p/I-Kennlinie 16 ist aber vorteilhaft um einen gewünschten Druck p genau einstellen zu können. Durch eine erfindungsgemäße p/I-Kennlinie 16 mit einem Drucksprung 17, an den eine progressiv verlaufende p/I-Kennlinie anschließt, ist also besonders vorteilhaft für eine Steuerung einer Fahrzeugkupplung.

| | Bezugszeichen |
|---|---|
| 1 | Proportional-Druckregelventil |
| 2 | Magnetteil |
| 3 | Hydraulikteil |
| 4 | Feder |
| 5 | Magnetspule |
| 6 | Magnetanker |
| 7 | Ankerstange |
| 8 | erstes Schließelement |
| 9 | zweites Schließelement |
| 10 | Flachsitz |
| 11 | Kugelsitz |
| 12 | Stößelstange |
| 13 | Sitzfläche |
| 14 | Fließrichtung |
| 15 | |
| 16 | p/I-Kennlinie |
| 17 | Drucksprung |
| 18 | Bereich niedriger Stromwerte |
| 19 | Bereich höherer Stromwerte |
| 20 | Mitnahmeelement |
| 21 | Blende |
| a | Abstand |
| b | Durchmesser Blende |
| ü | Überdeckung |
| A_1 | erste Schließfläche |
| A_2 | zweite Schließfläche |
| p | Druck |
| p_1 | Fülldruck |

(fortgesetzt)

| I | Stromstärke |
| I_1 | erster Stromwert |
| NW | Nennweite |
| X | Detailansicht Magnetteil |
| Y | Detailansicht Hydraulikteil |

**Patentansprüche**

1. Elektromagnetisches Proportional-Druckregelventil (1) für ein Fahrzeuggetriebe, umfassend zumindest

    - ein Magnetteil (2) mit mindestens einer Spule (5), einem Anker (6) und einer Ankerstange (7) sowie
    - ein Hydraulikteil (3) mit mindestens einem ersten und einem zweiten Schließelement (8, 9),

    wobei zum Öffnen und/oder Schließen der Schließelemente (8,9) eine zwischen Ankerstange (7) und erstem Schließelement (8) angeordnete Stößelstange (12) vorgesehen ist, welche mit dem ersten Schließelement (8) fest verbunden ist, **dadurch gekennzeichnet, dass** die Ankerstange (7) über ein elastisches Element (4) mit der Stößelstange (12) verbunden ist.

2. Elektromagnetisches Proportional-Druckregelventil (1) nach Anspruch 1, **dadurch gekennzeichnet, dass** das elastische Element (4) zwischen der Ankerstange (7) und einem Mitnahmeelement (20) angebracht ist, welches auf der Stößelstange (12) befestigt ist.

3. Elektromagnetisches Proportional-Druckregelventil (1) nach Anspruch 1 oder 2, gekennzeichnet t durch eine Feder als elastisches Element (4).

4. Elektromagnetisches Proportional-Druckregelventil (1) nach einem der vorhergehenden Ansprüche, **dadurch gekennzeichnet, dass** das erste Schließelement (8) mit einer ersten Schließfläche (A_1) einen Flachsitz (10) und das zweite Schließelement (9) mit einer zweiten Schließfläche (A_2) einen Kugelsitz (11) bilden.

5. Elektromagnetisches Proportional-Druckregelventil (1) nach Anspruch 4, **dadurch gekennzeichnet, dass**

    - das erste Schließelement (8) auf seiner der ersten Schließfläche (A_1) zugewandten Seite eine Sitzfläche (13) aufweist,
    - sich ein zylindrischer Raum an den Flachsitz (10) anschließt und in Richtung zum zweiten Schließelement (9) ausdehnt,

    - im unbestromten Zustand des Ventils (1) das zweite Schließelement (9) geschlossen ist und dabei eine Überdeckung (ü), welche dem Abstand zwischen Sitzfläche (13) und erster Schließfläche (A_1) entspricht, größer ist, als der siebte Teil einer Nennweite (NW) des Ventils (1), welche dem Durchmesser des zylindrischen Raums entspricht,
    - die zweite Schließfläche (A_2) größer ist als eine Kreisfläche mit einem Durchmesser, welcher der doppelten Überdeckung (ü) entspricht und
    - der Durchmesser (s) der Stößelstange (12) kleiner ist als das 0,7-fache des Durchmessers (b) einer Blende (21), wobei die Schließfläche (A_2) die Stirnseite der Blende (21) bildet.

6. Verfahren zum Regeln eines Verbrauchers mittels eines elektromagnetischen Proportional-Druckregelventils (1) nach Anspruch 5, wobei ein Druck p von dem elektromagnetischen Proportional-Druckregelventil (1) an den Verbraucher ausgegeben wird, bei welchem Verfahren

    - der ausgegebene Druck p bis zu einer an das Proportional-Druckregelventil (1) angelegten ersten Stromstärke (I_1), insbesondere im Bereich von 150 mA bis 200 mA, unverändert, insbesondere 0 bar, ist,
    - bei Erreichen dieser ersten Stromstärke (I_1) der Druck p einen Drucksprung (17) auf einen ersten Druckwert (p_1), insbesondere von 0 bar auf 0,2 bar bis 0,7 bar, vollzieht und
    - der Druck p nach dem Drucksprung (17) gemäß einer p/I-Kennline mit progressivem Verlauf verläuft.

7. Verfahren nach Anspruch 6, **dadurch gekennzeichnet. dass** die Steigung der p/I Kennlinie (16) nach dem Drucksprung (17) im Bereich niedriger Stromstärke (18) ca. 0 bis 4,0 bär/A und im Bereich mittlerer und hoher Stromstärke (19) bis zu 16 bar/A beträgt.

8. Verfahren nach Anspruch 6 oder 7, dadurch **gekennzeich**n e t , dass der erste Druckwert (p_1) dem Fülldruck des Verbrauchers entspricht.

9. Verfahren nach einem der Ansprüche 6 bis 8, **gekennzeich**n e t durch eine Fahrzeugkupplung als Verbraucher.

**Claims**

1. Electromagnetic proportional pressure control valve (1) for a vehicle transmission, comprising at least

- one magnetic component (2) having at least one coil (5), an armature (6) and an armature rod (7), and
- a hydraulic component (3) having at least a first and a second closing element (8, 9),

wherein, in order to open and/or close the closing elements (8, 9), a plunger rod (12) is provided which is arranged between the armature rod (7) and the first closing element (8) and is permanently connected to the first closing element (8), **characterized in that** the armature rod (7) is connected to the plunger rod (12) via an elastic element (4).

2. Electromagnetic proportional pressure control valve (1) according to Claim 1, **characterized in that** the elastic element (4) is attached between the armature rod (7) and a driver element (20) which is mounted on the plunger rod (12).

3. Electromagnetic proportional pressure control valve (1) according to Claim 1 or 2, **characterized by** a spring as an elastic element (4).

4. Electromagnetic proportional pressure control valve (1) according to one of the preceding claims, **characterized in that** the first closing element (8) forms, with a first closing face (A_1), a flat seat (10), and the second closing element (9) forms, with a second closing face (A_2), a ball seat (11).

5. Electromagnetic proportional pressure control valve (1) according to Claim 4, **characterized in that**

- the first closing element (8) has a seat face (13) on its side facing the first closing face (A_1),
- a cylindrical space adjoins the flat seat (10) and expands in the direction of the second closing element (9),
- in the non-energized state of the valve (1) the second closing element (9) is closed, and at the same time a degree of coverage (ü), which corresponds to the distance between the seat face (13) and the first closing face (A_1), is larger than the seventh part of a nominal diameter (NW) of the valve (1) which corresponds to the diameter of the cylindrical space,
- the second closing face (A_2) is larger than a circular face with a diameter which corresponds to twice the coverage (ü), and
- the diameter (s) of the plunger rod (12) is smaller than $0.7 \times$ the diameter (b) of a diaphragm (21), wherein the closing face (A_2) forms the end side of the diaphragm (21).

6. Method for controlling a consumer by means of an electromagnetic proportional pressure control valve (1) according to Claim 5, wherein a pressure p is output by the electromagnetic proportional pressure control valve (1) to the consumer, in which method

- the pressure p which is output is unchanged, in particular 0 bar, up to a first current strength (I_1), in particular in the range from 150 mA to 200 mA, which is applied to the proportional pressure control valve (1),
- when this first current strength (I_1) is reached, the pressure p carries out a pressure jump (17) to a first pressure value (p_1), in particular from 0 bar to 0.2 bar, up to 0.7 bar, and
- the pressure p after the pressure jump (17) follows a p/l characteristic curve with a progressive profile.

7. Method according to Claim 6, **characterized in that** the gradient of the p/l characteristic curve (16) after the pressure jump (17) is approximately 0 to 4.0 bar/A in the range of low current strength (18), and up to 16 bar/A in the range of medium and high current strength (19).

8. Method according to Claim 6 or 7, **characterized in that** the first pressure value (p_1) corresponds to the filling pressure of the consumer.

9. Method according to one of Claims 6 to 8, **characterized by** a vehicle clutch as a consumer.

## Revendications

1. Soupape électromagnétique de régulation de pression proportionnelle (1) pour une transmission de véhicule, comprenant au moins

- une partie magnétique (2) avec au moins une bobine (5), une armature (6) et une tige d'armature (7) et
- une partie hydraulique (3) comprenant au moins un premier et un deuxième élément de fermeture (8, 9),

une tige poussoir (12) disposée entre la tige d'armature (7) et le premier élément de fermeture (8) étant prévue pour ouvrir et/ou fermer les éléments de fermeture (8, 9), laquelle est connectée fixement au premier élément de fermeture (8), **caractérisée en ce que** la tige d'armature (7) est connectée par le biais d'un élément élastique (4) à la tige poussoir (12).

2. Soupape électromagnétique de régulation de pression proportionnelle (1) selon la revendication 1, **caractérisée en ce que** l'élément élastique (4) est monté entre la tige d'armature (7) et un élément d'entraînement (20) qui est fixé sur la tige poussoir (12).

**3.** Soupape électromagnétique de régulation de pression proportionnelle (1) selon la revendication 1 ou 2, **caractérisée par** un ressort en tant qu'élément élastique (4).

**4.** Soupape électromagnétique de régulation de pression proportionnelle (1) selon l'une quelconque des revendications précédentes, **caractérisée en ce que** le premier élément de fermeture (8) forme, avec une première surface de fermeture (A_1), un siège plat (10) et le deuxième élément de fermeture (9) forme, avec une deuxième surface de fermeture (A_2), un siège sphérique (11).

**5.** Soupape électromagnétique de régulation de pression proportionnelle (1) selon la revendication 4, **caractérisée en ce que**

- le premier élément de fermeture (8) présente, sur son côté tourné vers la première surface de fermeture (A_1), une surface de siège (13),
- un espace cylindrique se raccorde au siège plat (10) et s'étend dans la direction vers le deuxième élément de fermeture (9),
- dans l'état non alimenté en courant de la soupape (1), le deuxième élément de fermeture (9) est fermé et dans ce cas un recouvrement (ü), qui correspond à la distance entre la surface de siège (13) et la première surface de fermeture (A_1), est supérieur à un septième d'une largeur nominale (NW) de la soupape (1), qui correspond au diamètre de l'espace cylindrique,
- la deuxième surface de fermeture (A_2) est supérieure à une surface circulaire ayant un diamètre qui correspond au double du recouvrement (ü) et
- le diamètre (s) de la tige poussoir (12) est inférieur à 0,7 fois le diamètre (b) d'un bandeau (21), la surface de fermeture (A_2) formant le côté frontal du bandeau (21).

**6.** Procédé de régulation d'un consommateur au moyen d'une soupape électromagnétique de régulation de pression proportionnelle (1) selon la revendication 5, dans lequel une pression p de la soupape électromagnétique de régulation de pression proportionnelle (1) est fournie au niveau du consommateur, dans lequel procédé

- la pression fournie p reste inchangée jusqu'à une première intensité de courant (I_1) appliquée à la soupape de régulation de pression proportionnelle (1), en particulier dans la plage de 150 mA à 200 mA, en particulier une pression de 0 bar,
- à l'obtention de cette première intensité de courant (I_1), la pression p subit un saut de pression (17) jusqu'à une première valeur de pression (p_1), en particulier de 0 bar à 0,2 à 0,7 bar, et
- la pression p après le saut de pression (17) suit une courbe caractéristique p/I ayant une allure progressive.

**7.** Procédé selon la revendication 6, **caractérisé en ce que** la pente de la caractéristique p/I (16) après le saut de pression (17) vaut, dans la plage de faibles intensités de courant (18), approximativement 0 à 4,0 bar/A et dans la plage de moyennes et hautes intensités de courant (19), jusqu'à 16 bar/A.

**8.** Procédé selon la revendication 6 ou 7, **caractérisé en ce que** la première valeur de pression (p_1) correspond à la pression de remplissage du consommateur.

**9.** Procédé selon l'une quelconque des revendications 6 à 8, **caractérisé par** un embrayage de véhicule en tant que consommateur.

Fig. 1

EP 1 856 587 B1

X

7

6

a

4

20

12

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030037825 A1
- DE 10255414 A1